(19) **Europäisches Patentamt / European Patent Office / Office européen des brevets**

(11) **EP 3 706 384 A1**

(12) # EUROPEAN PATENT APPLICATION

(43) Date of publication:
**09.09.2020 Bulletin 2020/37**

(21) Application number: **19020110.3**

(22) Date of filing: **07.03.2019**

(51) Int Cl.:
**H04L 29/06** *(2006.01)*    **H04L 9/00** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **UVUE Limited**
**Cambridge CB4 0WS (GB)**

(72) Inventors:
• **Ward, Jonathan**
  **Cambridge, CB4 0WS (GB)**
• **Galindo, David**
  **Cambridge, CB4 0WS (GB)**

(74) Representative: **Norris, Timothy Sweyn**
**Basck Ltd.**
**50 - 60 Station Road**
**Cambridge CB1 2JH (GB)**

(54) **SYSTEM AND METHOD FOR COORDINATING DATA PROCESSING NODES IN DISTRIBUTED LEDGER ARRANGEMENT**

(57)    Disclosed is a system having an input arrangement that receives input data, and an output arrangement that provides output data. The system includes a plurality of data processing nodes to process the input data and generate the output data, depending on operation of a distributed ledger arrangement to which entries are added to represent a temporal progression of events. A directed acyclic graph (DAG) is utilised to agree on data transactions required for adding entries to distributed ledger arrangement. The system utilises a decentralised beacon arrangement that randomly elects a group of data processing nodes to form consensus of the next entry in the distributed ledger arrangement, and the system utilises a control arrangement that provides a mechanism for anti-coordinating transactions to be included in the DAG, wherein the control arrangement utilises algorithms to determine a structure of the DAG when rewarding the data processing nodes of the group.

FIG. 1

EP 3 706 384 A1

## Description

TECHNICAL FIELD

The present disclosure relates generally to distributed ledger arrangements; more specifically, the present disclosure relates to systems for coordinating data processing nodes in distributed ledger arrangements. Moreover, the present disclosure relates to methods for coordinating data processing nodes in distributed ledger arrangements. Furthermore, the present disclosure also relates to computer program products comprising non-transitory computer-readable storage media having computer-readable instructions stored thereon, the computer-readable instructions being executable by a computerized device comprising processing hardware to execute aforementioned methods.

BACKGROUND

With advancements in technology, processes involving recordal have increasingly been digitised. In this regard, recordal of information, for example, stages of mail delivery, stages of a manufacturing process, stages of load scheduling, financial exchanges, service exchanges, and so forth are maintained digitally, thereby allowing for efficient maintenance and timely upgradation thereof. Moreover, recently, such digital records are increasingly being maintained on distributed platforms (namely, distributed ledgers) so as to prevent fallacious activities associated with the digital records.

Specifically, the distributed ledgers allow a change (for example, an addition of information as an entry, an alteration in an already added entry, and so forth) therein, only upon obtaining a mutual agreement (namely, consensus) relating to the change by participants (generally, a plurality of data processing nodes) in a distributed ledger network, thereby making the digital records reliable and secure. It will be appreciated that a given entry that causes the change includes information relating to a plurality of events, and a digital signature of a data processing node making the change, therein.

However, reaching such consensus for a given entry, by each of the participants in the distributed ledger network, consumes a lot of time and energy. Moreover, some participants may deviate from their expected behaviour that further increases a time required to reach the consensus. Such deviation from expected behaviour by some participants leads to security threats to remainder of the participants in the distributed ledger network. Therefore, reaching the consensus by each of the participants in the distributed ledger network enforces security of the system by compromising in terms of time and energy consumption for reaching the consensus for the given entry. Subsequently, recent approaches employ a given data processing node to reach consensus for the given entry in a defined time, thereby making the change in the distributed ledger more efficient in terms of time and energy.

However, such approaches employing the given data processing node to reach consensus for the given entry (for example, addition of the given entry to the distributed ledger) gives the given data processing node a one-shot monopoly power over plurality of events that are included in the given entry. Such a monopoly power to the given data processing node further makes the consensus mechanism prone to malicious activities by the given data processing node. In an example, the given data processing node employed for addition of an entry to the distributed ledger adds the entry such that the entry is invalid owing to an incorrect plurality of data transactions therein and/or incorrect digital signatures therein.

Furthermore, the given data processing node employed to reach consensus for the given entry may collude with data processing nodes in the distributed ledger network to make fallacious changes to the distributed ledger, for example, adding false events in the given entry, and so forth. Additionally, the participants of the distributed ledger arrangement have to work in synchronisation to add entries therein as each of the entry comprises a reference to the previous entry. Consequently, this leads to exponentially high waiting times before a participant can add an entry thereof to the distributed ledger. The distributed ledger arrangement may coordinate times in which a given participant is expected to add an entry to the distributed ledger arrangement, however this results in participants manipulating the distributed ledger arrangement into adding only the entries that have a high reward associated therewith. In recent times, several mechanisms have been employed by existing distributed ledger arrangements that improve scalability and require less synchronicity among participants adding entries therein. However, in such existing distributed ledger arrangements, rewards provided to the participants for adding and validating the entries therein vary significantly based on the time and location of the entry in the distributed ledger arrangement.

Therefore, in light of the foregoing discussion, there exists a need to overcome the aforementioned drawbacks associated with conventional systems and methods for reaching consensus and implementing consensus in the distributed ledger.

SUMMARY

The present disclosure seeks to provide a system for coordinating data processing nodes in a distributed ledger arrangement (namely, a system that coordinates data processing nodes in a distributed ledger arrangement, when in operation), wherein the system includes a plurality of data processing nodes. The plurality of data processing nodes process the input data and generate the output data, depending on operation of a distributed ledger arrangement to which entries are added to represent a temporal progression of events. The present disclosure seeks to improve performance efficiency of a decentralized computer network (implemented as the distributed ledger arrangement) in terms of reliability and robustness against malicious attacks. Additionally, the present disclosure increases coordination amongst the data processing nodes associated with the distributed ledger arrangement and eliminates a scope for speculation by the data processing nodes, thereby increasing reliability in the system.

In one aspect, an embodiment of the present disclosure provides a system having an input arrangement that receives input data, and an output arrangement that provides output data,

wherein the system includes a plurality of data processing nodes that are mutually coupled together via a data communication network to enable an exchange of data therebetween when in operation,

wherein the plurality of data processing nodes process the input data and generate the output data, depending on operation of a distributed ledger arrangement to which entries are added to represent a temporal progression of events,

wherein a directed acyclic graph (DAG) is utilised to agree on a set of data transactions required for adding entries to the distributed ledger arrangement,

characterised in that

(i) the system utilises a decentralised beacon arrangement that randomly elects a group of data processing nodes that operate to form a consensus of the next entry to be added to the distributed ledger arrangement; and
(ii) the system utilises a control arrangement that provides a mechanism for at least partially anti-coordinating transactions to be included in the directed acyclic graph (DAG), wherein the control arrangement utilises one or more algorithms to determine a structure of the directed acyclic graph (DAG) when rewarding the data processing nodes of the group.

The present disclosure is of advantage that a robust and reliable mechanism is provided to establish coordination amongst data processing nodes for addition of vertices in DAG or entries in the distributed ledger arrangement. The system prevents the distributed ledger arrangement from malicious third-party attacks. Moreover, the present disclosure is of advantage, such that the system implements secure addition of the vertices to the DAG requiring less processing power and thus, consumes less energy (significantly reduced electricity consumptions), and also expends less time for addition of the entry (significantly increased system temporal responsiveness). Such mechanism employed by the system to facilitate effective coordination for addition of the vertices to the DAG enhances security of the system by preventing fraudulent cases due to great variation in rewards. Such mechanism also enhances the whole by decreasing the amount of computing time, and the amount of energy used to perform a task energy. Such efficiency against energy and time consumption makes the system competent for enhanced performance and saves cost of operation thereof.

Optionally, the mechanism employs one or more Schelling schedules in the mechanism for at least partially anti-coordinating transactions to be included in the directed acyclic graph (DAG).

Optionally, the one or more Schelling schedules provide a strict ordering of nodes by specifying a time interval in which the data processing nodes are expected to add a given data transaction to the directed acyclic graph (DAG).

Optionally, the strict ordering is arbitrary, wherein the data processing nodes are assigned different slots in successive epochs of the distributed ledger arrangement.

More optionally, the input arrangement and the output arrangement are coupled to a physical environment, wherein the input data includes sensed data representative of measurements from the physical environment, and the output data includes operative data to cause one or more changes within the physical environment, and wherein the entry added to the distributed ledger arrangement is employed to change a physical state of the physical environment.

In another aspect, an embodiment of the present disclosure provides a method for (of) operating a system having an input arrangement that receives input data, and an output arrangement that provides output data,

wherein the system includes a plurality of data processing nodes that are mutually coupled together via a data communication network to enable an exchange of data therebetween when in operation,

wherein the plurality of data processing nodes process the input data and generate the output data, depending on operation of a distributed ledger arrangement to which entries are added to represent a temporal progression of events,

wherein a directed acyclic graph (DAG) is utilised to agree upon a set of data transactions required for adding entries to the distributed ledger arrangement,

characterised in that the method includes:

(i) arranging for the system to utilise a decentralised beacon arrangement that randomly elects a group of data processing nodes that operate to form a consensus of the next entry to be added to the distributed ledger arrangement; and

(ii) utilising a control arrangement that provides a mechanism for at least partially anti-coordinating transactions to be included in the directed acyclic graph (DAG), wherein the control arrangement utilises one or more algorithms to determine a structure of the directed acyclic graph (DAG) when rewarding the data processing nodes of the group.

Optionally, the mechanism employs one or more Schelling schedules in the mechanism for at least partially anti-coordinating transactions to be included in the directed acyclic graph (DAG).

Optionally, the one or more Schelling schedules provide a strict ordering of nodes by specifying a time interval in which the data processing nodes are expected to add a given data transaction to the directed acyclic graph (DAG).

More optionally, the strict ordering is arbitrary, wherein the data processing nodes are assigned different slots in successive epochs of the distributed ledger arrangement.

Optionally, the method further includes arranging for the input arrangement and the output arrangement to be coupled to a physical environment, wherein the input data includes sensed data representative of measurements from the physical environment, and the output data includes operative data to cause one or more changes within the physical environment, and wherein the entry added to the distributed ledger arrangement is employed to change a physical state of the physical environment.

In yet another aspect, an embodiment of the present disclosure provides a computer program product comprising a non-transitory computer-readable storage medium having computer-readable instructions stored thereon, the computer-readable instructions being executable by a computerised device comprising processing hardware to execute the aforesaid method.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

> FIG. 1 is an illustration of a system that coordinates data processing nodes in a distributed ledger arrangement, in accordance with an embodiment of the present disclosure;

> FIG. 2 is a schematic representation of a directed acyclic graph (DAG), in accordance with an embodiment of the present disclosure;

> FIG. 3 is a schematic representation of a directed acyclic graph (DAG) comprising an invalid vertex, in accordance with an embodiment of the present disclosure;

> FIG. 4 is a schematic representation of mechanism for at least partially anti-coordinating transactions to be included in a directed acyclic graph, in accordance with an embodiment of the present disclosure; and

> FIG. 5 illustrates steps of a method of operating a system for coordinating data processing nodes in distributed ledger arrangement, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a system having an input arrangement that receives input data, and an output arrangement that provides output data,
wherein the system includes a plurality of data processing nodes that are mutually coupled together via a data communication network to enable an exchange of data therebetween when in operation,
wherein the plurality of data processing nodes process the input data and generate the output data, depending on operation of a distributed ledger arrangement to which entries are added to represent a temporal progression of events,
wherein a directed acyclic graph (DAG) is utilised to agree on a set of data transactions required for adding entries to the distributed ledger arrangement,

characterised in that

(i) the system utilises a decentralised beacon arrangement that randomly elects a group of data processing nodes that operate to form a consensus of the next entry to be added to the distributed ledger arrangement; and

(ii) the system utilises a control arrangement that provides a mechanism for at least partially anti-coordinating transactions to be included in the directed acyclic graph (DAG), wherein the control arrangement utilises one or more algorithms to determine a structure of the directed acyclic graph (DAG) when rewarding the data processing nodes of the group.

In another aspect, an embodiment of the present disclosure provides a method of operating a system having an input arrangement that receives input data, and an output arrangement that provides output data, wherein the system includes a plurality of data processing nodes that are mutually coupled together via a data communication network to enable an exchange of data therebetween when in operation, wherein the plurality of data processing nodes process the input data and generate the output data, depending on operation of a distributed ledger arrangement to which entries are added to represent a temporal progression of events, wherein a directed acyclic graph (DAG) is utilised to agree on a set of data transactions required for adding entries to the distributed ledger arrangement, characterised in that the method includes:

(i) arranging for the system to utilise a decentralised beacon arrangement that randomly elects a group of data processing nodes that operate to form a consensus of the next entry to be added to the distributed ledger arrangement; and

(ii) utilising a control arrangement that provides a mechanism for at least partially anti-coordinating transactions to be included in the directed acyclic graph (DAG), wherein the control arrangement utilises one or more algorithms to determine a structure of the directed acyclic graph (DAG) when rewarding the data processing nodes of the group.

The present disclosure seeks to provide a solution to a plurality of technical problems associated with coordination of the plurality of data processing nodes for addition of data transactions as vertices in the directed acyclic graph (DAG), namely transactions as an entry in the distributed ledger arrangement. The system is of advantage to implement the coordination mechanism for addition of entry to the distributed ledger such that the coordination amongst the plurality of data processing nodes is established without compromising any one of:

security, run-time, fault tolerance. Beneficially, the system aims to reduce a waiting time for a data processing node to add a vertex to the DAG. Moreover, the waiting time is reduced without hampering asynchronicity (namely, asynchronous operation) of the DAG. Furthermore, the system is of advantage to enable a stable reward mechanism, thereby preventing (or at least discouraging or reducing) data processing nodes from manipulating the DAG and/or the distributed ledger arrangement. Consequently, the system overcomes a major disadvantage associated with utilization of DAG in the distributed ledger arrangement by minimising a variation between rewards for vertices at a start of the DAG and vertices at an end of the DAG. Furthermore, employing the coordination mechanism for data processing nodes enables higher security in the distributed ledger arrangement and further increases a throughput of the distributed ledger arrangement. Specifically, moreover, the present disclosure enables an equal rewarding system for data processing nodes adding data transactions to the directed acyclic graph (DAG) irrespective of the time of addition of data transaction therein. Furthermore, the system disclosed in the present disclosure encourages adherence to the protocol specified thereby, by providing rewards according to the coordination of the data processing nodes. Additionally, the waiting times for adding a data transaction to the distributed ledger arrangement are significantly reduced.

It will be appreciated that the linear distributed ledger arrangement enables strict ordering thereby making the arrangement more reliable, time efficient and manageable. The system integrates properties of linear distributed ledger arrangement with properties of decentralised directed acyclic graph (DAG) based distributed ledger arrangement to achieve a platform. The platform aims to offer reliability, time-efficiency, and manageability properties of the linear distributed ledger arrangement and robustness against malicious activities, misconduct behaviours and fraudulent cases, and enhanced scalability properties of DAG-based distributed ledger arrangement.

The present disclosure, addresses the problem by operating to facilitate a consensus for addition of an entry in the distributed ledger by way of a protocol similar to a proof-of-stake method, thereby preventing the plurality of data processing nodes from utilising a huge amount of time and resources (such as processor energy consumption, processor energy dissipation, heat generation in processing hardware, cooling energy applied to processing hardware or any other measure associated with processing resources) when forming the consensus.

In the context of the present invention, the system includes a plurality of data processing nodes that are mutually coupled together via the data communication network to enable the exchange of data therebetween when in operation. Such a plurality of data processing nodes comprises a plurality of computing devices, wherein the plurality of data processing nodes, and therefore the plurality of computing devices, are arranged in a decentralised form. The system requires the presence of the plurality of data processing nodes interconnected via the data communication network to perform the method steps. The term "*the plurality of data processing nodes*" refers to computational elements that are operable to respond to, and processes instructions that drive, the distributed computational system. Optionally, the plurality of data processing nodes includes, but are not limited to, a microprocessor, a microcontroller, an application-specific integrated circuit (ASIC), customer digital hardware, a complex instruction set computing (CISC) microprocessor, a reduced instruction set (RISC) microprocessor, a very long instruction word (VLIW) microprocessor, an artificial intelligence (AI) computing engine based on hierarchical networks of variable-state machines, or any other type of processing circuit. Furthermore, the plurality of data processing nodes are one or more individual processors, processing devices and various elements associated with a processing device that may be shared by other processing devices. Additionally, the plurality of data processing nodes, processing devices and elements are arranged in various architectures for responding to and processing the instructions that drive the system. Beneficially, such arrangement of the plurality of data processing nodes provides adaptability and flexibility to the distributed computing system.

Optionally, the plurality of data processing nodes are processing devices that operate automatically. In such regard, the plurality of data processing nodes are equipped with artificial intelligence algorithms that responds to and performs the instructions that drive the system based on data learning techniques. More optionally, the plurality of data processing nodes are processing devices that responds to and performs the instructions that drive the system based on an input provided from a user.

Moreover, the plurality of data processing nodes are communicably coupled to each other via the data communication network. The data communication network allows for communication among the plurality of data processing nodes. In other words, each of the plurality of data processing nodes is capable of communicating with other data processing nodes via the data communication network. Notably, the data communication network refers to an arrangement of interconnected, programmable and/or non-programmable components that, when in operation, facilitate data communication between one or more electronic devices and/or databases. Furthermore, the data communication network may include, but is not limited to, a peer-to-peer (P2P) network, a hybrid peer-to-peer network, local area networks (LANs), radio access networks (RANs), metropolitan area networks (MANs), wide area networks (WANs), all of or a portion of a public network such as global computer network known as the Internet®, a private network, a cellular network and any other communication system. Additionally, the data communication network employs wired or wireless communication that can be carried out via one or more known protocols, including, but not limited to, Internet Protocol, Wireless Access Protocol (WAP), Frame Relay, or Asynchronous Transfer Mode (ATM). Moreover, any other suitable protocols using voice, video, data, or combinations thereof, can also be employed, for example VoIP.

In an example embodiment, the data communication network is implemented as a distributed peer-to-peer (P2P) network of interconnected plurality of data processing nodes.

The plurality of data processing nodes processes the input data and generates the output data, depending on operation of a distributed ledger arrangement to which entries are added to represent a temporal progression of events. Specifically, the system of the present disclosure employs a distributed ledger arrangement to which entries are added to represent a sequential and temporal progression of events. Furthermore, throughout the present disclosure, the term "*distributed ledger*" refers to a ledger (such as a database) of data transactions such as operations and/or contracts. In this regard, the ledger is consensually shared and synchronised across multiple sites, institutions or geographies. Pursuant to embodiments of the present disclosure, the distributed ledger refers to a database of the entries, wherein the entries comprise the records of data transactions therein. Moreover, the distributed ledger is consensually shared and synchronised in a decentralised form across the plurality of data processing nodes. Optionally, such data processing nodes are established across different locations and operated by different users. Beneficially, the distributed ledger eliminates the need of a central authority to maintain and protect against manipulation. Specifically, the entries comprising the data transactions in the distributed ledger are monitored publicly, thereby making the distributed ledger robust against attacks.

It will be appreciated that the plurality of data processing nodes in the distributed ledger may access each of the entries in the distributed ledger and may own an identical copy of each of the entries. Notably, an alteration made to the distributed ledger is reflected almost instantly to each of the plurality of data processing nodes. Subsequently, an alteration (such as recordal of an entry in the distributed ledger) is done when all or some of the plurality of data processing nodes perform a validation with respect to the alteration. In such a case, the entry is recorded (namely, added) in the distributed ledger in an immutable form when at least a threshold number of data processing nodes from the plurality of data processing nodes reach a consensus that the entry is valid. In other words, recording of the entry is denied when the threshold number of data processing nodes cannot reach a consensus regarding the validity of the entry. In an example, the threshold number of data processing nodes to reach a consensus may be fifty-one per cent (51%) of the plurality of data processing nodes. Optionally, information in the distributed ledger is stored securely using cryptography techniques. Beneficially, the distributed ledger allows reliable and transparent recordal of the entries, in that the data transactions (for example, exchange of a technical resource over a network) are permanently recorded and may not be capable of alterations. Thus, the distributed ledger provides greater transparency, enhanced security, improved traceability, increased efficiency and speed of operations.

Additionally, the system as described in the present disclosure optimises the operation of addition of entries in the distributed ledger in terms of run-time. Specifically, the system does not encounter decreased run time owing to an increase in a number of the plurality of data processing nodes. Moreover, the system facilitates an effective consensus for addition of an entry in the distributed ledger by employing time-efficient validation processes thereby preventing instances of misconduct in the system by any of the plurality of data processing nodes.

It will be appreciated that the system implemented by way of the distributed ledger cannot be secured by physical solutions against malicious activities, such as surveillance and access control. Subsequently, the robustness of the system against malicious third-party attacks is facilitated by enhancing cyber-security measures for infrastructures (namely, the distributed ledger). Subsequently, the distributed ledger is made more reliable for users thereof. Specifically, cyber-security against attacks in critical infrastructures such as the distributed ledgers (for example, a financial network implemented in a distributed ledger) prevents users of the critical infrastructures from vulnerable instances (such as identity thefts, fraudulent behaviours, and so forth). Optionally, the system is able to comprehend a normal state of operation of the system through artificial intelligence techniques (for example, machine learning algorithms) which would take an enormous amount of man-hours for humans to map and analyse. Additionally, the system is made more agile, robust, and flexible to adapt to new cyber-threat instances to prevent major disruptions and shut-downs of the system.

The term "*consensus*" refers to a specific set of rules that the plurality of data processing nodes unfailingly enforce in order to validate the data transactions. Furthermore, the consensus regarding the data transactions refer to general agreement of the plurality of data processing nodes related to the data transactions being recorded in the distributed ledger arrangement. Conventionally, such consensus is reached by voting by the plurality of data processing nodes. However, such consensus mechanisms possess plurality of technical problems relating to run-time, overhead computation, energy waste, employed unfair means, and so forth. Pursuant to embodiments of the present disclosure, the disclosure aims to overcome, at least partially, drawbacks associated with conventional consensus system and provides a technical solution to effectively overcome the aforesaid drawbacks.

In an example embodiment, the distributed ledger arrangement is any one of: a public ledger, a private ledger. Furthermore, the distributed ledger arrangement with public (namely, un-permissioned) control of access may be open for every participant (namely, each of the plurality of data processing nodes) of the operations within the system; however, it will be appreciated that it is highly desirable that data exchanges occurring in respect of the public distributed ledger are implemented via signals that are encrypted and/or obfuscated, to resist malicious third-party attacks, corruption or interference; associated data maps are optionally employed to define a configuration of encryption and/or obfuscation employed to encode and corresponding decode given data. Alternatively, the ledger with private (namely, permissioned) control of access have an access control layer implemented therein; however, as aforesaid, it will be appreciated that it is highly desirable that data exchanges occurring in respect of the ledger are implemented via signals that are encrypted and/or obfuscated, to resist malicious third-party attacks, corruption or interference. Specifically, the plurality of data processing nodes have a control over who can join the system and who can participate in the data transactions within the system. Additionally, such a distributed ledger arrangement has access protection rights with defined constraints regarding rights to be exploited by the plurality of data processing nodes.

Optionally, the distributed ledger is implemented by way of a blockchain platform. Specifically, in the blockchain platform, a given entry in the blockchain is stored in form of a block that stores a cryptographic hash of a previous entry, new information associated with the given entry and a timestamp associated with the given entry. Pursuant to embodiments of the present disclosure, the new information associated with the given entry in the distributed ledger may comprise at least one data transaction.

Furthermore, optionally, the distributed ledger arrangement, specifically, the blockchain platform is managed by a peer-to-peer network collectively adhering to a protocol for inter-record communication and validating new entries in the distributed ledger. Moreover, once an entry is recorded in the distributed ledger arrangement, the entry cannot be altered. Thus, storing the data transactions in the distributed ledger provides an immutable record comprising consensus pertaining to the data transactions with its associated timestamp.

In an embodiment, one or more blocks within the blockchain platform have access rights associated thereto. The access rights allow and/or restrict users (namely, the parties involved in the operation, the plurality of data processing nodes and so forth) to read, store, move and modify the data associated with the data transactions. Such access rights are beneficially implemented using private-public key encryption, alternatively or additionally, private-public key obfuscation.

The system has the input arrangement that receives input data. Throughout the present disclosure, the term "*input arrangement*" refers to a computational element or an assembly of a plurality of computational elements that is operable to receive the input data. Optionally, the input arrangement pre-processes the input data to convert thereto in a desired form. More optionally, input arrangement may comprise at least one of: a receiver to receive the input data, a processor to pre-process the input data to a desirable form, a transmitter to transmit the pre-processed input data. The input arrangement transmits the pre-processed data to the plurality of data processing nodes. Optionally, the input arrangement provides a medium to input information thereto. Additionally, optionally, the input arrangement may comprise a sensor arrangement, implemented using sensors and other peripheral devices, to receive the input data from a physical system connected to the system. It will be appreciated that the input arrangement is operated by a user to provide the input data thereto.

Optionally, the term "*user*" as used in the present disclosure, refers to an entity including a person (i.e., a human being) or a virtual personal assistant (an autonomous program or a bot) equipped with artificial intelligence.

Pursuant to embodiments of the present disclosure, the term "*input data*" refers to raw information received by the input arrangement for processing thereof. Optionally, the input arrangement receives the input data from a physical system connected to the system. More optionally, the input arrangement receives the input data from a user. In a first example, input data is acquired, using a sensor arrangement, from a physical system, wherein the physical system is implemented as a plurality of loads connected to an electric grid. In such case, the input data comprises information relating to power consumed by each of the plurality of loads connected to the electric grid. In a second example, the input data is provided by at least one user of the system. In such case, the input data comprises information relating to financial transactions performed by each of the at least one user.

Furthermore, the term "*output arrangement*" refers to a computational element or an assembly of a plurality of computational elements that is operable to provide the processed data (namely, the output data). Optionally, the output arrangement may comprise at least one of: a receiver to receive data, a processor to process the data to a desirable form, a transmitter to transmit the data as the output data. More optionally, the output arrangement provides the output data to the user of the system. Additionally, optionally, the output arrangement provides the output data using a medium, for example, a display, a set of signals, and so forth. Furthermore, optionally, the output arrangement provides the output data to the physical system so as to facilitate effective operation of the physical system. In an example, the output arrangement provides validated record of events of the physical system. In such case, the output arrangement enables effective operation of the physical system by enhancing a run-time and security of the physical system.

Furthermore, throughout the present disclosure, the term "*output data*" refers to information (namely, processed data) provided by the output arrangement for utilisation thereof. In the first example, wherein the acquired input data comprises information relating to power consumed by each of the plurality of loads connected to the electric grid. In such case, the output data may comprise information relating to validation of the information relating to power consumed by each of the plurality of loads connected to the electric grid.

Optionally, the input arrangement provides the input data received, to the plurality of data processing nodes for processing thereof and the output arrangement provides processed data generated by the plurality of data processing nodes as the output data. In such case, optionally, the input arrangement and the output arrangement are employed based on the input data to be received and the output data to be generated by the plurality of data processing nodes.

The plurality of data processing nodes processes the input data and generates the output data, depending on operation of a distributed ledger arrangement to which entries are added to represent the temporal progression of events. It will be appreciated that the input arrangement and the output arrangement in the system are dependent on the operation of the distributed ledger arrangement. In such case, the input data received by the input arrangement is information related to the events to be stored in the distributed ledger arrangement as entries. Specifically, the system of the present disclosure employs a distributed ledger arrangement to which entries are added to represent a sequential and temporal progression of events. It will be appreciated that the system employing the distributed ledger arrangement for operation thereof, when operated, provides a mechanism for recording events as entries therein such that the entries are added only upon validation thereof. Moreover, the entries represent a sequential progression of the events thereby enabling tracking of the events.

Pursuant to embodiments of the present disclosure, the events are to be added (namely, recorded) as entries to the distributed ledger arrangement so as to prevent fraudulent cases and to maintain a record thereof. By adding the events of, for example, power consumption of a load node, the aforementioned system provides a validated and an immutable proof of the power consumption by the load node, thereby preventing any fraudulent case such as inaccurate billing, and so forth.

The input arrangement and the output arrangement are coupled to a physical environment, wherein the input data includes sensed data representative of measurements from the physical environment, and the output data includes operative data to cause one or more changes within the physical environment, and wherein an entry added to the distributed ledger arrangement is employed to change a physical state of the physical environment.

Pursuant to embodiments of the present disclosure, the input arrangement acquires the input data from the physical environment (namely, the physical system connected to the system) such that the input data includes the sensed data representative of measurements. Specifically, the measurements associated with the physical environment denotes parameters associated therewith, wherein the sensed data provides a value for such parameters associated with the physical environment. Additionally, the output arrangement provides the output data to the physical environment such that the output data includes the operative data. Specifically, the operative data is employed by the physical environment to efficiently perform an operation. The operation performed by the physical environment by using the output data causes a change in the physical environment, for example actuation of a valve, a movement of a baffle, an activation of a laser cutting tool, and so forth. Furthermore, the acquired input data and generated output data, operates to facilitate an event, wherein the event is added as an entry to the distributed ledger arrangement. Moreover, adding the event as entry to the distributed ledger arrangement changes a physical state, for example, sequential upgradation of the event, of the physical environment. Optionally, such change in the physical state contribute to a progression of events in the physical environment.

Furthermore, optionally, each of the plurality of data processing nodes may have an input arrangement and an output arrangement associated therewith. In an exemplary implementation of the system of the present disclosure, the distributed ledger arrangement is used to track and record different stages in a physical environment implemented as a food delivery process. In such case, the distributed ledger arrangement is employed to track and record events such as stages of the food delivery process namely, origin, transport, distribution and sale of food products. Therefore, in such implementation, data processing nodes associated with each stage of the food delivery process employ respective computing devices thereof as input arrangements to provide the input data to be stored as entries on the distributed ledger arrangement. Furthermore, data processing nodes are provided with output arrangements (such as, computing devices thereof) to access output data, such as status and information related to each stage of the food delivery process, from the distributed ledger arrangement. Subsequently, the entries added to the distributed ledger arrangement, relating to each stage of the food delivery process is employed to change a physical state, for example, upgradation of information regarding status of delivery process for a given food product, of the food delivery process.

Furthermore, the directed acyclic graph (DAG) is utilised to agree a set of data transactions required for adding entries to the distributed ledger arrangement. Notably, a given entry in the distributed ledger can record a plurality of data transactions therein. Therefore, the directed acyclic graph (DAG) is utilised to determine the set of data transactions to be added in a given entry.

Throughout the present disclosure, the term "*directed acyclic graph*" refers to a data structure that employs topological ordering for storage of data therein. Specifically, the directed acyclic graph (DAG) allows a sequential traversal of data stored therein from earlier to later. Moreover, the DAG is parallelised that results in higher throughput. The DAG is utilised for defining relationships between entries in the distributed ledger. Beneficially, the DAG is employed to build the distributed ledger having intrinsic parallelism during addition of entries in the distributed ledger, during traversal within the distributed ledger, and during communication between the plurality of data processing nodes within the distributed ledger. Optionally, the DAG records partial ordering of events occurring over an asynchronous network of the plurality of data processing nodes. Beneficially, the DAG enhance scalability of the distributed ledger while recording the plurality of transaction records as entries in the distributed ledger, thereby allowing recordal of large number of transaction records. Moreover, the recordal of the plurality of transaction records in not impeded by network containing an increasing number of the plurality of data processing nodes.

Throughout the present disclosure, the term "*data transaction*" refers to an exchange of information. It will be appreciated that such information exchanged may relate to, for example, a physical system, a physical process, a service, a financial transaction, an arbitrary process, and so forth (for example, any combination of these). Moreover, a data transaction occurs between at least two transacting parties, wherein a party from the at least two transacting parties offers the information to be exchanged and a party from the at least two transacting parties receives the information to be exchanged. Subsequently, the term "set of data transactions" refers to a collection of the data transactions as discussed herein above.

Optionally, the set of data transactions are provided to the system as the input data. More optionally, the input data may be provided by a data processing node form the plurality of data processing nodes, wherein the input data is recorded as an entry and is further added to the distributed ledger arrangement. Optionally, the input data may be provided by a user (such as a bot) associated with a data processing node, wherein the input data is acquired from a physical system connected to the data processing node. Subsequently, optionally, an input data is processed using a processor, for example, a processor of a data processing node providing the input data, to derive the data transaction information therefrom.

Furthermore, the set of data transactions is required to be added as entries to the distributed ledger arrangement. Moreover, the DAG is utilised for agreeing a set of data transactions. Subsequently, for a set of data transactions, at least two transacting parties involved in each of the data transaction, generate a request for addition of the given data transaction to the distributed ledger arrangement. As a response, optionally, the system generates a computational task for addition of the set of data transactions as entries in the distributed ledger arrangement.

Optionally, the DAG is protected via encryption, for example encryption firewalls. In addition, the directed acyclic graph (DAG) is created for each of entries in the distributed ledger, wherein the directed acyclic graph includes at least one vertex therein. Notably, a directed acyclic graph comprises vertices and edges connecting the vertices. Optionally, a given vertex in the directed acyclic graph includes a data transaction. It will be appreciated that the directed acyclic graph (DAG) is a finite directed graph having no cycles (namely, loop) therein. The directed acyclic graph (DAG) grows in between two consecutive entries in the distributed ledger, wherein an end of the directed acyclic graph (DAG) for a given entry indicates termination of time associated with the given entry. Consequently, the termination of time associated with the given entry allows for addition of new entries in the distributed ledger. The time associated with a given entry indicates a time in which plurality of data transaction records associated with the given entry is being validated within the distributed ledger system.

Furthermore, a directed acyclic graph (DAG) is represented by way of the expression G = (V,E) wherein V represents the vertices (a given vertex represented as $v_i$, therefore $v_i \in V$) in the directed acyclic graph (represented as G) and E represents the edges connecting the vertices. For each vertex $v_i$, the outgoing edges from the vertex are hash-references to exactly $k_{out} = 2$ previous vertices. Each vertex also includes the round number of the entry in the distributed ledger arrangement and a digital signature from the data processing node that appended it to the directed acyclic graph (DAG). It will be appreciated that a given directed acyclic graph (DAG) comprises a set of genesis vertices at a time of initiation of the directed acyclic graph (DAG). Subsequently, data processing nodes, that are elected using the decentralised beacon arrangement, can asynchronously add data transactions as vertices to the directed acyclic graph (DAG) that reference the genesis vertices, over a time period of the addition of the entry to the distributed ledger arrangement. Consequently, such vertices are then referenced by new vertices, which leads to propagation of the directed acyclic graph (DAG). It will be appreciated that since the data processing nodes asynchronously add data transactions to the directed acyclic graph (DAG), each data processing node may possess a slightly different copy of the directed acyclic graph (DAG) and this does not prevent addition of new vertices to the directed acyclic graph (DAG). The slightly different copies of the directed acyclic graph (DAG) can be synchronised across the decentralised network upon termination of the directed acyclic graph (DAG) to update directed acyclic graph (DAG) replicas stored by the other data processing nodes.

The system employs a decentralised beacon arrangement that randomly elects a group of data processing nodes that operate to form a consensus of the next entry to be added to the distributed ledger arrangement. Specifically, the decentralised beacon arrangement employs a mechanism namely, multi-party computation protocol. More specifically, the decentralised beacon arrangement is initiated during a 'set-up phase', wherein the set-up phase refers to a point of time in the distributed ledger arrangement when an entry has been added to the distributed ledger arrangement and a subsequent entry (namely, the next entry) is to be added to the distributed ledger arrangement. Furthermore, the decentralised beacon arrangement randomly elects a group of data processing nodes from the plurality of data processing node. In an example, such group of data processing nodes includes data processing nodes that have performed at least one of: addition of a vertex to an existing DAG, addition of a vertex to a new DAG, participation in validation of a data transaction.

It will be appreciated that the group of data processing nodes operate to include a plurality of vertices from the DAG as the next entry to the distributed ledger arrangement. Specifically, each of the plurality of vertices comprise a data transaction therein. Optionally, the system provides the group of data processing nodes with authority to append vertices to the DAG associated with the next entry. However, this authority to append vertices to the DAG associated with the next entry by the group of data processing nodes may allow for misconduct (such as addition of invalid vertices in the DAG, wherein the invalid vertex may be fallacious or empty) by a data processing node. Therefore, the system restricts a number of vertices that may be appended by a data processing node in the group, to the DAG associated with the next entry. Subsequently, malicious data processing nodes (such as the data processing node adding invalid vertices) are identified. Such malicious data processing nodes may be penalised for such misconduct.

It will be appreciated that a DAG comprises a plurality of vertices. Moreover, the vertices in the DAG stores data transactions therein. Furthermore, the set of data transactions recorded in the vertices of the DAG are added as, at an instance a single entry, to the distributed ledger arrangement. Optionally, each vertex of the plurality of vertices in the DAG represent a single data transaction. Additionally, the plurality of vertices in the DAG are connected by way of edges. Specifically, a first vertex is referenced from at least one previous vertex, wherein the previous vertex is recorded in the DAG. Moreover, the first vertex further references at least one future vertex. Such references between the plurality of vertices are established using the edges. In an example, a given first vertex is referenced from two previous vertices such that the references established using the edges are hash-references.

Additionally, optionally, a vertex in the DAG includes a round number associated with an entry relating to the vertex to the distributed ledger arrangement and a digital signature from a data processing node adding the vertex. Specifically, the term round number denotes a quantitative value representing a chronology of the entry in the distributed ledger. In an example, the round number for an entry is calculated based on a number of entries added in the distributed ledger arrangement before the entry. In such case, for an entry that is to be added after 'i' number of previously added entries, the round number will be 'i+1'. It will be appreciated that a vertex can only reference vertices with same or lower round number, thereby preventing fraudulent cases during addition of vertices in the DAG. It will be appreciated that the DAG comprises tip vertices, wherein the tip vertices are referenced from at least one previous vertex, but such tip vertices are not further referenced by any vertex, at a given time.

Optionally, the plurality of data processing nodes operate to add vertices to the directed acyclic graph (DAG) asynchronously. More optionally, the vertices added by the data processing nodes reference from previous vertices (namely, genesis vertices) over a time period between entries being produced. Such a time period between two entries is referred as an epoch. Moreover, the term 'asynchronous' as used herein means that each of the data processing nodes from the group of data processing nodes participating in forming the consensus may keep a slightly different copy of the DAG, to which they are adding vertices. However, such different copies of the DAG do not prevent addition of vertices thereto. Moreover, the vertices of the DAG are synchronised timely across a peer-to-peer network to update the copies of the DAG stored by each of the data processing nodes.

Beneficially, the DAG enables partial ordering of the plurality of vertices therein. Moreover, the DAG offers increased security at higher entry production rates owing to asynchronous operation thereof. Additionally, the DAG enables compact representation of the vertices thereby increasing entry throughput. Subsequently, the DAG can be extended throughout epoch, wherein the epoch for a next entry is a time period between a previous entry and the next entry, in the distributed ledger arrangement. Moreover, use of a compact representation of vertices in the DAG enables faster communication between the vertices, thereby eliminating time required for transitioning between vertices.

Furthermore, the group of data processing nodes elected by the decentralised beacon arrangement collaboratively build and decide upon the next entry to be added to the distributed ledger arrangement by participating in forming of consensus for the next entry. Specifically, the consensus for the next entry is formed after a time when an entry preceding the next entry is successfully added to the distributed ledger arrangement. Optionally, the data processing nodes in the group of data processing nodes have mutually identical stakes to access a validation process that is employed to form the consensus. In such case, the data processing nodes elected to form the group by the decentralised beacon arrangement provide a stake to access the validation process that is employed to form the consensus. Specifically, a stake provided by a data processing node from the group, enables the data processing node to perform the computational task for validation and/or addition of a vertex for addition thereof, as an entry in the distributed ledger arrangement.

Optionally, the system locks the stakes provided by the group of data processing nodes to access the validation process that is employed to form the consensus for the next entry, for a given period of time. It will be appreciated that in a locked state, the stakes cannot be used for a consensus of a different entry than the next entry. However, the system enables the data processing nodes to redelegate the stake for addition of, for example, a second consensus for addition of a second plurality of vertices as a second entry in the distributed ledger arrangement. In such case, a redelegate operation is initialised such that the locked stake is no longer used for participation in the consensus for the next entry. Optionally, in case of a misconduct by a data processing node, for example, addition of a plurality of invalid vertices, the data processing node is penalised by slashing a stake provided by the data processing node. Such mechanism for acquiring mutually identical stakes from the group of data processing nodes for accessing the validation process that is employed to form the consensus for the next entry ensures that each of the group of data processing nodes have associated uniform financial risks and rewards, owing to identical stakes. Moreover, the given period of time refers to the time between an entry that has been added and the addition of the next entry, to the distributed ledger arrangement.

Moreover, such stakes provided by the group of data processing nodes needs to be resilient to attacks. In an example, in a public distributed ledger arrangement, a single data processing arrangement may control multiple stakes, and hence the system needs to be resistant to concerted attacks from more than 50% of data processing nodes providing stakes for consensus. Furthermore, in an example embodiment, the system specifies a threshold stake (such as a threshold stake amount) that is to be provided by each of the data processing nodes in the group so as to participate in the validation for the next entry. In another example embodiment, the system organises a competitive process (such as an auction). In such case, a set of data processing nodes, selected from the group of data processing nodes providing stakes, is allowed to participate in the validation process employed to form the consensus for the next entry, wherein the data processing nodes in the set are the nodes providing a stake at a higher percentile than a certain threshold.

Moreover, the system utilises a control arrangement that provides a mechanism for at least partially anti-coordinating transactions to be included in the directed acyclic graph (DAG). Specifically, the anti-coordinating mechanism involves the group of data processing nodes elected to form the consensus. The control arrangement provides a mechanism that determines an order in which the data processing nodes may add data transactions to the plurality of vertices in the directed acyclic graph (DAG). Consequently, the data processing nodes follow the order determined by the control arrangement to add data transactions to the directed acyclic graph (DAG).

Optionally, the mechanism employs one or more Schelling schedules in the mechanism for at least partially anti-coordinating transactions to be included in the directed acyclic graph (DAG). Specifically, the control arrangement employs the decentralised beacon arrangement to enable the ordering of the data processing nodes. Pursuant to one or more Schelling schedules, the decentralised beacon arrangement is used to provide a strict ordering of the data processing nodes. Optionally, the strict ordering is arbitrary, wherein the data processing nodes are assigned different slots in successive epochs of the distributed ledger arrangement. The ordering of the data processing nodes is arbitrary, and because of the decentralised beacon arrangement generating a random ordering, the data processing nodes are assigned different slots for adding data transaction to the plurality of vertices.

Furthermore, the control arrangement utilises one or more algorithms to determine a structure of the directed acyclic graph (DAG) when rewarding the data processing nodes of the group. The one or more algorithms are explained herein using a simplified exemplary implementation. In the exemplary implementation, time for the addition of an entry to the distributed ledger arrangement is represented as T and a synchronous setting is assumed wherein all the data processing nodes elected to form the consensus have access to an initial identical DAG data structure. The number of data processing nodes is represented as $\ell$. Furthermore, the reward for a data processing node for adding a vertex to the DAG is represented as P, the probability of a vertex being included in an entry defined as being in the past set of tip vertices, wherein the tip vertices are the vertices in the DAG that are yet to be referenced by other vertices. Furthermore, in the exemplary implementation, it is assumed that the data processing nodes adding the plurality of vertices to the DAG do so uniformly in $n$ of the discrete time intervals. For $n$=1, only the two vertices are included in the vertex set, wherein for $n.2^n \leq \ell$, the rewards are specified by upper and lower bounds as:

$$\frac{2n}{\ell} \leq P \leq \frac{1}{\ell} \sum_{i=1}^{n} 2^i$$

wherein the lower bound applies in general and implied maximal reward P=1, for $n=\ell/2$. These imply that lower and upper bounds increase monotonically with $n$, which is a measure of the degree of the anti-coordination of data processing nodes in the consensus. It is to be understood that maximal anti-coordination is a Nash-equilibrium for the data processing nodes. In an instance, to achieve such Nash-equilibrium, data processing nodes may add a vertex after a time, t, that is sampled from the uniform distribution on the interval, [0, T].

Optionally, the one or more Schelling schedules specify a time interval in which the data processing nodes are expected to add a given data transaction to the directed acyclic graph (DAG). In the aforementioned exemplary implementation, the data processing nodes append the plurality of vertices to the DAG during one of $\ell/2$ discrete time intervals with duration $\delta t = 2T/\ell$ and vertices added in a particular time interval only contain references to vertices that were added in the time interval that immediately preceded it. Beneficially, the aforementioned Schelling schedules eliminate stochastic variation in distribution of waiting times. Furthermore, the one or more Schelling schedules encourages the data processing nodes to follow protocol and eliminates a possibility of deviation for anti-coordinating mechanism. Moreover, the present disclosure enables an equal rewarding system for data processing nodes adding data transactions to the directed acyclic graph (DAG) irrespective of the time of addition of data transaction thereby.

The present disclosure also relates to the method as described above. Various embodiments and variants disclosed above apply mutatis mutandis to the method.

Optionally, the mechanism employs one or more Schelling schedules in the mechanism for at least partially anti-coordinating transactions to be included in the directed acyclic graph (DAG).

Optionally, the one or more Schelling schedules provide a strict ordering of nodes by specifying a time interval in which the data processing nodes are expected to add a given data transaction to the directed acyclic graph (DAG).

More optionally, the strict ordering is arbitrary, wherein the data processing nodes are assigned different slots in successive epochs of the distributed ledger arrangement.

Optionally, the method further includes arranging for the input arrangement and the output arrangement to be coupled to a physical environment, wherein the input data includes sensed data representative of measurements from the physical environment, and the output data includes operative data to cause one or more changes within the physical environment, and wherein the entry added to the distributed ledger arrangement is employed to change a physical state of the physical environment.

In yet another aspect, an embodiment of the present disclosure provides a computer program product comprising a non-transitory computer-readable storage medium having computer-readable instructions stored thereon, the computer-readable instructions being executable by a computerised device comprising processing hardware to execute the aforesaid method.

DETAILED DESCRIPTION OF THE DRAWINGS

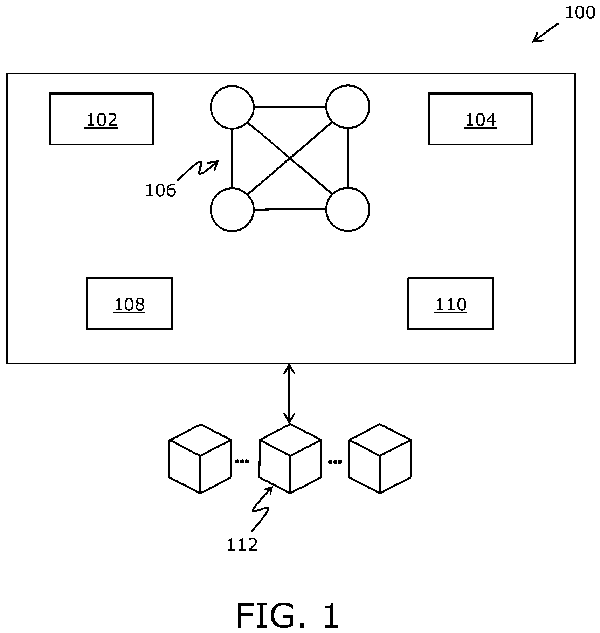

Referring to FIG. 1, there is shown an illustration of a system **100** for coordinating, namely that coordinates when in operation, data processing nodes in a distributed ledger arrangement **112**, in accordance with an embodiment of the present disclosure. The system **100** has an input arrangement **102** that receives input data, and an output arrangement **120** that provides output data. Moreover, the system **100** includes a plurality of data processing nodes **106** that are mutually coupled together via a data communication network (not shown) to enable an exchange of data therebetween when in operation. Additionally, the plurality of data processing nodes **106** processes the input data and generates the output data, depending on operation of a distributed ledger arrangement **112** to which an entry is added to represent a temporal progression of events. Furthermore, a directed acyclic graph (not shown) is utilized to agree upon a set of data transactions required for adding the entry to the distributed ledger arrangement **112**.

The system **100** employs a decentralized beacon arrangement **108**, a and a control arrangement **110** to facilitate addition of the entry to the distributed ledger arrangement **112**. Typically, the decentralized beacon arrangement **108** randomly elects a group of data processing nodes from the plurality of data processing nodes **106**. The group of data processing nodes operate to form a consensus of the entry to be added to the distributed ledger arrangement **114**. Furthermore, the control arrangement **112** provides a mechanism for at least partially anti-coordinating transactions to be included in the directed acyclic graph (DAG), wherein the control arrangement **112** utilises one or more algorithms to determine a structure of the directed acyclic graph (DAG) when rewarding the data processing nodes of the group.

It may be understood by a person skilled in the art that the FIG. 1 includes a simplified illustration of the system **100** for sake of clarity only, which should not unduly limit the scope of the claims herein. The person skilled in the art will recognize many variations, alternatives, and modifications of embodiments of the present disclosure.

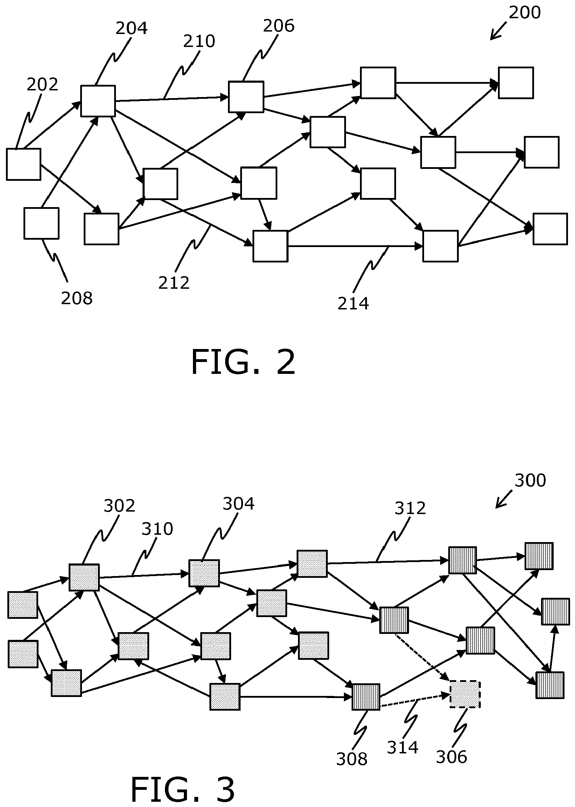

Referring to FIG. 2, there is illustrated a schematic representation of a directed acyclic graph (DAG) **200**, in accordance with an embodiment of the present disclosure. The directed acyclic graph is utilized to agree on a set of data transactions required for adding entries to a distributed ledger arrangement. As shown, the directed acyclic graph (DAG) **200** is comprises a plurality of vertices (depicted as vertices **202**, **204**, **206**, **208)** and a plurality of edges (depicted as edges **210**, **212**, **214**). Moreover, a given vertex comprises a data transaction to be added to the distributed ledger. For each vertex, the outgoing edges from the vertex are hash-references to previous vertices. As shown, the outgoing edge **210** from the vertex **204** is the hash-reference to previous vertex **202**. Each vertex **202**, **204**, **206** and **208** also includes the round number of the entry in the distributed ledger arrangement and a digital signature from the data processing node that appended it to the directed acyclic graph (DAG) **200**. Furthermore, the directed acyclic graph (DAG) **200** comprises a set of genesis vertices (depicted as a genesis vertex **202** and a genesis vertex **208**) at a time of initiation of the directed acyclic graph (DAG) **200**.

It may be understood by a person skilled in the art that the FIG. 2 includes a simplified illustration of the directed acyclic graph (DAG) **200** for sake of clarity only, which should not unduly limit the scope of the claims herein. The person skilled in the art will recognize many variations, alternatives, and modifications of embodiments of the present disclosure.

Referring next to FIG. 3, there is illustrated a schematic representation of a directed acyclic graph (DAG) **300** comprising an invalid vertex, in accordance with an embodiment of the present disclosure. The directed acyclic graph (DAG) **300** is represented by way of a plurality of vertices (depicted as vertices **302**, **304**, **306**, **308**) and a plurality of edges (depicted as edges **310**, **312**, **314**). With reference to the figure, the vertices **302**, **304** and **306** belong to a round 'r'. Moreover, the vertex **308** belong to a round 'r+1'. It will be appreciated that the round 'r' includes vertices **302**, **304** and **306** to form a consensus for a given entry. Furthermore, the round 'r+1' includes the vertex **308** to form a consensus for an entry succeeding the given entry. As shown, the vertex **306** to be included in the round 'r' comprises reference from the vertex **308** to be included in the round 'r+1'. Therefore, it is to be understood that the data transaction in the vertex **306** is an invalid data transaction as a data transaction cannot be referenced form a future data transaction. Consequently, the vertex **306** will not be included in the directed acyclic graph (DAG).

It may be understood by a person skilled in the art that the FIG. 3 includes a simplified illustration of a fraudulent behaviour by way of an invalid vertex in the directed acyclic graph (DAG) **300** for sake of clarity only, which should not unduly limit the scope of the claims herein. The person skilled in the art will recognize many variations, alternatives, and modifications of embodiments of the present disclosure.

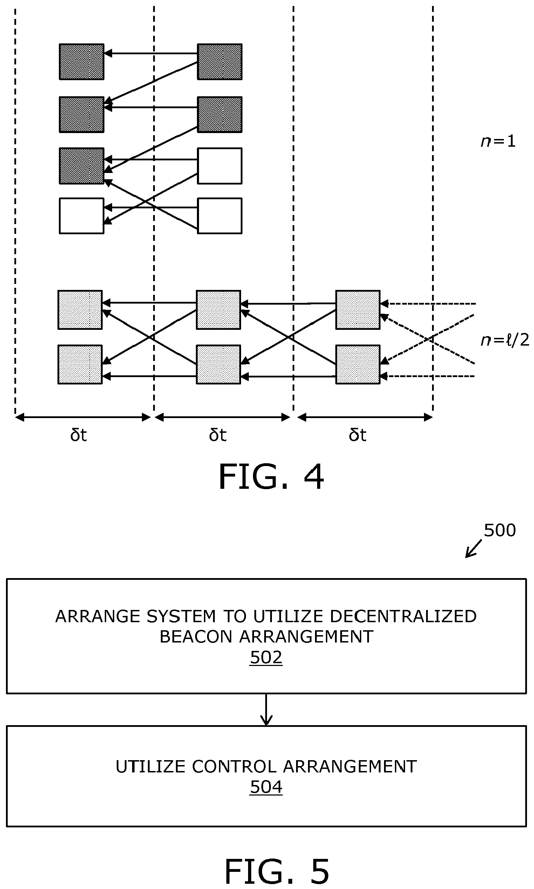

Referring to FIG. 4, there is illustrated a schematic representation of a mechanism for at least partially anti-coordinating transactions (namely, a mechanism that at least partially anti-coordinates transactions) to be included in a directed acyclic graph (such as the directed acyclic graph **200**), in accordance with an embodiment of the present disclosure. The number of data processing nodes elected to form a consensus is represented as $\ell$. Furthermore, the data processing nodes add the plurality of vertices to the directed acyclic graph (DAG) do so uniformly in $n$ of the discrete time intervals. For $n=1$, only the two vertices are included in the vertex set. Alternatively, for $n = \ell 2$, the data processing nodes append the plurality of vertices to the DAG during one of $\ell 2$ discrete time intervals with duration $\delta t = 2T/\ell$ and vertices added in a particular time interval only contain references to vertices that were added in the time interval that immediately preceded it

Referring to FIG. 5, illustrated are steps of a method **500** of (for) operating a system having an input arrangement that receives input data, and an output arrangement that provides output data, in accordance with an embodiment of the present disclosure. The system includes a plurality of data processing nodes that are mutually coupled together via a data communication network to enable an exchange of data therebetween when in operation. The plurality of data processing nodes process the input data and generate the output data, depending on operation of a distributed ledger arrangement to which entries are added to represent a temporal progression of events, wherein a directed acyclic graph (DAG) is utilized to agree on a set of data transactions required for adding entries to the distributed ledger arrangement. At a step **502**, the system is arranged to utilise a decentralised beacon arrangement that randomly elects a group of data processing nodes that operate to form a consensus of the next entry to be added to the distributed ledger arrangement. At a step **504**, a control arrangement that provides a mechanism for at least partially anti-coordinating transactions included in the directed acyclic graph (DAG) is utilized, wherein the control arrangement utilizes one or more algorithms to determine a structure of the directed acyclic graph (DAG) when rewarding the data processing nodes of the group.

The steps **502** and **504** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

**Claims**

1. A system having an input arrangement that receives input data, and an output arrangement that provides output data,
   wherein the system includes a plurality of data processing nodes that are mutually coupled together via a data communication network to enable an exchange of data therebetween when in operation, wherein the plurality of data processing nodes process the input data and generate the output data, depending on operation of a distributed ledger arrangement to which entries are added to represent a temporal progression of events, wherein a directed acyclic graph (DAG) is utilised to agree on a set of data transactions required for adding entries to the distributed ledger arrangement, **characterised in that**

   (i) the system utilises a decentralised beacon arrangement that randomly elects a group of data processing nodes that operate to form a consensus of the next entry to be added to the distributed ledger arrangement; and
   (ii) the system utilises a control arrangement that provides a mechanism for at least partially anti-coordinating transactions to be included in the directed acyclic graph (DAG), wherein the control arrangement utilises one or more algorithms to determine a structure of the directed acyclic graph (DAG) when rewarding the data processing nodes of the group.

2. A system of claim 1, **characterised in that** the mechanism employs one or more Schelling schedules in the mechanism for at least partially anti-coordinating transactions to be included in the directed acyclic graph (DAG).

3. A system of claim 2, **characterised in that** the one or more Schelling schedules provide a strict ordering of nodes by specifying a time interval in which the data processing nodes are expected to add a given data transaction to the directed acyclic graph (DAG).

4. A system of claim 3, **characterised in that** the strict ordering is arbitrary, wherein the data processing nodes are assigned different slots in successive epochs of the distributed ledger arrangement.

5. A system of any one of claims 1 to 4, **characterised in that** the input arrangement and the output arrangement are coupled to a physical environment, wherein the input data includes sensed data representative of measurements from the physical environment, and the output data includes operative data to cause one or more changes within the physical environment, and wherein the entry added to the distributed ledger arrangement is employed to change a physical state of the physical environment.

6. A method for (of) operating a system having an input arrangement that receives input data, and an output arrangement that provides output data,
   wherein the system includes a plurality of data processing nodes that are mutually coupled together via a data communication network to enable an exchange of data therebetween when in operation, wherein the plurality of data processing nodes process the input data and generate the output data, depending on operation of a distributed ledger arrangement to which entries are added to represent a temporal progression of events, wherein a directed acyclic graph (DAG) is utilised to agree on a set of data transactions required for adding entries to the distributed ledger arrangement, **characterised in that** the method includes:

(i) arranging for the system to utilise a decentralised beacon arrangement that randomly elects a group of data processing nodes that operate to form a consensus of the next entry to be added to the distributed ledger arrangement; and

(ii) utilising a control arrangement that provides a mechanism for at least partially anti-coordinating transactions to be included in the directed acyclic graph (DAG), wherein the control arrangement utilises one or more algorithms to determine a structure of the directed acyclic graph (DAG) when rewarding the data processing nodes of the group.

7. A method of claim 6, **characterised in that** the mechanism employs one or more Schelling schedules in the mechanism for at least partially anti-coordinating transactions to be included in the directed acyclic graph (DAG).

8. A method of claim 7, **characterised in that** the one or more Schelling schedules provide a strict ordering of nodes by specifying a time interval in which the data processing nodes are expected to add a given data transaction to the directed acyclic graph (DAG).

9. A method of claim 8, **characterised in that** the strict ordering is arbitrary, wherein the data processing nodes are assigned different slots in successive epochs of the distributed ledger arrangement.

10. A method of any one of claims 6 to 9, **characterised in that** the method further includes arranging for the input arrangement and the output arrangement to be coupled to a physical environment, wherein the input data includes sensed data representative of measurements from the physical environment, and the output data includes operative data to cause one or more changes within the physical environment, and wherein the entry added to the distributed ledger arrangement is employed to change a physical state of the physical environment.

11. A computer program product comprising a non-transitory computer-readable storage medium having computer-readable instructions stored thereon, the computer-readable instructions being executable by a computerised device comprising processing hardware to execute a method as claimed in any one of claims 6 to 10.

FIG. 1

FIG. 2

FIG. 3

$n=1$

$n=\ell/2$

$\delta t$        $\delta t$        $\delta t$

# FIG. 4

500

ARRANGE SYSTEM TO UTILIZE DECENTRALIZED
BEACON ARRANGEMENT
502

UTILIZE CONTROL ARRANGEMENT
504

# FIG. 5

Europäisches
Patentamt

European
Patent Office

Office européen
des brevets

# EUROPEAN SEARCH REPORT

Application Number

EP 19 02 0110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AD\'AN S\'ANCHEZ DE PEDRO ET AL: "Witnet: A Decentralized Oracle Network Protocol", ARXIV.ORG, CORNELL UNIVERSITY LIBRARY, 201 OLIN LIBRARY CORNELL UNIVERSITY ITHACA, NY 14853, 27 November 2017 (2017-11-27), XP081300095, DOI: 10.13140/RG.2.2.28152.34560 * the whole document * | 1-11 | INV. H04L29/06 H04L9/00 |
| A | SARAH AZOUVI ET AL: "Betting on Blockchain Consensus with Fantomette", ARXIV.ORG, CORNELL UNIVERSITY LIBRARY, 201 OLIN LIBRARY CORNELL UNIVERSITY ITHACA, NY 14853, 16 May 2018 (2018-05-16), XP081178529, * paragraphs [03.3], [03.4], [0005], [0006] * | 1-11 | |
| A | Nathan Hutton ET AL: "Design of a Scalable Distributed Ledger", , 19 June 2018 (2018-06-19), pages 1-30, XP055595053, Retrieved from the Internet: URL:https://fetch.ai/uploads/Fetch.AI-Ledger-Yellow-Paper.pdf [retrieved on 2019-06-07] * paragraphs [0001], [0003], [03.1], [0A.2], [000B] * | 1-11 | TECHNICAL FIELDS SEARCHED (IPC) H04L |

The present search report has been drawn up for all claims

| Place of search | Date of completion of the search | Examiner |
|---|---|---|
| Munich | 8 August 2019 | Ghomrasseni, Z |

EPO FORM 1503 03.82 (P04C01)